# EUROPÄISCHE PATENTSCHRIFT

(11) **EP 3 217 030 B1**
(45) Veröffentlichungstag und Bekanntmachung des Hinweises auf die Patenterteilung: **28.11.2018**
(21) Anmeldenummer: 17156020.4
(22) Anmeldetag: 14.02.2017
(51) Int. Cl.: F16C 41/04, F16C 35/063, F16C 19/46, F01L 1/047, B23P 15/00

(54) **VERFAHREN ZUR HERSTELLUNG EINER LAGERBAUGRUPPE**
METHOD FOR MANUFACTURING A BEARING ASSEMBLY
PROCÉDÉ DE FABRICATION D'UN MODULE DE PALIER

(30) Priorität: 07.03.2016 DE 102016203654
(43) Veröffentlichungstag der Anmeldung: 13.09.2017
(73) Patentinhaber: Mahle International GmbH, 70376 Stuttgart (DE)
(72) Erfinder: MENONNA, Antonio, 71254 Ditzingen (DE); SCHACHERER, Roland, 78187 Geisingen (DE); STEINMETZ, Christoph, 71634 Ludwigsburg (DE); UNRATH, Christoph, 73660 Urbach (DE)
(74) Vertreter: BRP Renaud & Partner mbB Rechtsanwälte Patentanwälte Steuerberater

(56) Entgegenhaltungen:
- EP-A1- 1 995 417
- DE-A1-102009 009 664
- DE-A1-102011 004 803
- JP-A- 2008 025 738
- US-A- 3 958 847

## Beschreibung

Die vorliegende Erfindung betrifft ein Verfahren zur Herstellung einer Lagerbaugruppe zur Lagerung einer Steuerwelle. Die Erfindung betrifft außerdem eine mit diesem Verfahren hergestellte Lagerbaugruppe sowie ein Verfahren zur Herstellung einer Steuerwelle unter Verwendung einer solchen Lagerbaugruppe.
Das Herstellen von Nockenwellen oder generell von Steuerwellen erfolgt üblicherweise durch ein Fügen einzelner Komponenten, bspw. Lager und Nocken, auf der Nockenwelle, woraufhin anschließend die Nockenwelle, insbesondere im Bereich der Nocken, geschliffen und dadurch fertig bearbeitet wird. Gerade bei diesem Fertigbearbeiten durch Schleifen entsteht Schleifstaub, der in die Lager bzw. insbesondere in die Lagerflächen der Lager eindringen, sich dort festsetzen und bei einem späteren Betrieb einer mit der Nockenwelle ausgestatteten Brennkraftmaschine zu einem erhöhten Verschleiß oder im ungünstigsten Falle sogar zu einer Beschädigung der Lager führen kann. Aus diesem Grund ist es bekannt, die Lager, bspw. Wälz- oder Nadellager, während des Schleifens der Nocken durch manuell aufgebrachte Käfige vor einer Verschmutzung zu schützen. Diese Käfige müssen jedoch aufwendig manuell angeschraubt und nach dem eigentlichen Schleifvorgang wieder abgeschraubt werden, was nicht nur zeitaufwendig, sondern auch kostenintensiv ist.

Die DE 10 2009 009 664 A1 offenbart eine Nockenwelle einer Brennkraftmaschine, wobei zur axialen Fixierung eines Lagers an beiden Stirnseiten des Lagers eine Transportsicherung angeordnet ist, die als mit der Nockenwelle verklebtes oder verstemmtes Ringelement ausgebildet ist.

Aus der US 3 958 847 A sind zweireihige Schrägkugellager mit geteilten Lagerringen sowie Zylinderrollenlager mit separaten Borden bekannt, die mittels in flachen Ringnuten angeordneten Klebestreifen als vormontierte Einheit zusammengehalten werden.

Die vorliegende Erfindung beschäftigt sich daher mit dem Problem, ein Verfahren zur Herstellung einer Steuerwelle anzugeben, welches die aus dem Stand der Technik bekannten Nachteile überwindet.

Dieses Problem wird erfindungsgemäß durch die Gegenstände der unabhängigen Ansprüche, insbesondere ein Verfahren zur Herstellung einer Lagerbaugruppe nach dem unabhängigen Anspruch 1 und Lagerbaugruppen nach den unabhängigen Ansprüchen 3 und 7, gelöst. Vorteilhafte Ausführungsformen sind Gegenstand der abhängigen Ansprüche.
Die vorliegende Erfindung beruht auf dem allgemeinen Gedanken, zunächst eine vorgefertigte Lagerbaugruppe herzustellen, die bereits über einen aufgeschrumpften Schrumpfschlauch oder aufgewickeltes Folienband derart geschützt ist, dass diese im vorgefertigten Zustand bei der Steuerwellenherstellung ohne zusätzlichen (Schmutz-)Käfig verwendet werden kann, da der Schrumpfschlauch oder das Folienband die Lagereinrichtung vor evtl. auftretendem Schleifstaub/Schleifschlamm/Schleifpartikeln schützt. Bei dem erfindungsgemäßen Verfahren zur Herstellung der Lagerbaugruppe wird zunächst ein Lager bereitgestellt oder hergestellt, indem beispielsweise Wälzkörper in einem Lagerring montiert werden. Anschließend wird das Lager zusammen mit zwei stirnseitig angeordneten Ringen, insbesondere Kunststoff- oder Metallringen, auf einen Montagedorn aufgeschoben. Die beiden Ringe werden dabei gegen die Stirnseiten, das heißt die axialen Stirnseiten, des Lagers vorgespannt. Nun wird der Schrumpfschlauch über das Lager und die beiden Ringe geschoben und durch Erwärmen auf diese aufgeschrumpft. Alternativ hierzu kann auch das Folienband über das Lager und die beiden Ringe gewickelt werden. Anschließend kann die so vorgefertigte und durch den aufgeschrumpften Schrumpfschlauch bzw. das aufgewickelte Folienband zusammen gehaltene Lagerbaugruppe vom Montagedorn abgezogen und der weiteren Herstellung der Steuerwelle zugeführt werden. Die vorgefertigte Lagerbaugruppe kann der Herstellung der Steuerwelle vorgelagert werden, wodurch ein bislang äußerst komplexer Fertigungsprozess zumindest geringfügig entzerrt werden kann.

Eine vorteilhafte Ausführungsform des Verfahrens der vorliegende Erfindung beruht weiter auf dem allgemeinen Gedanken, die entsprechend dem zuvor beschriebenen Verfahren hergestellte Lagerbaugruppe nunmehr auf einem entsprechenden Steuerwellenschaft/Nockenwellenschaft zusammen mit zumindest einem Steuerelement/Nocken anzuordnen, wobei die Steuerelemente/Nocken bspw. thermisch gefügt sein können, während zumindest eine vorgefertigte Lagerbaugruppe lediglich auf den Steuerwellenschaft aufgeschoben und mittels der beiden Ringe fixiert wird. In einem sich daran anschließenden Verfahrensschritt können nun die Nocken oder Steuerelemente geschliffen werden, ohne dass dabei auftretender Schleifstaub oder Schleifschlamm in die Lager, das heißt in die Lagerbaugruppe(n) eindringt und dort zu unerwünschten Verschmutzungen führt. Ist der Schleifvorgang beendet, wird der Schrumpfschlauch oder das Folienband über der zumindest einen Lagerbaugruppe entfernt, indem bspw. eine Reißlasche gezogen wird, die den Schrumpfschlauch entlang einer Materialschwächung, bspw. einer Perforationsnaht, aufreißt und dadurch leicht entfernbar macht. Ein Folienband kann einfach abgewickelt werden. Bei dem erfindungsgemäßen Verfahren zur Herstellung der Steuerwelle kann insbesondere auf die bislang erforderliche, aufwendige und damit auch kostenintensive Montage der Schutzkäfige über den einzelnen Lagern verzichtet werden, wodurch sich der Fertigungsprozess nicht nur erheblich vereinfacht, sondern auch deutlich kostengünstiger gestalten lässt. Beim Einbau der erfindungsgemäßen Nockenwelle in eine Zylinderkopfhaube bzw. einen Zylinderkopf einer Brennkraftmaschine wird diese vor Erreichen der endgültigen Einbauendlage noch um wenige Zehntel Millimeter, bspw. ca. 0,6mm in Axialrichtung hin und her verschoben, um einen zumindest geringfügigen Abstand zwischen dem Lager und den beiden stirnseitig dazu angeordneten Ringen zu erreichen und dadurch einen Freigang zu ermöglichen.
Selbstverständlich können dabei auf der erfindungsgemäßen Steuerwelle/Nockenwelle nicht nur Nocken an sich, sondern auch Exzenterscheiben, Sensoren, Signalgeber oder weitere Bauteile mit zumindest einer Lagerbaugruppe aufgefädelt werden.

Die vorliegende Erfindung beruht weiter auf dem allgemeinen Gedanken, eine nach dem anfangs beschriebenen Verfahren hergestellte Lagerbaugruppe in einem separaten Fertigungsschritt vorzufertigen und dadurch die Montage einer damit ausgestatteten Steuerwelle einfacher und insbesondere auch flexibler gestalten zu können. Wie bereits eingangs erwähnt, kann dabei der Schrumpfschlauch eine Reißlasche aufweisen, mit welcher durch ein Aufbringen einer entsprechenden Zugkraft ein Aufreißen des Schrumpfschlauches und damit ein leichtes Entfernen desselben möglich sind. Um das Aufreißen und auch das Entfernen des Schrumpfschlauches zu vereinfachen, kann dieser eine Materialschwächung aufweisen, bspw. eine Perforation, wodurch eine vergleichsweise einfache und kostengünstige Sollreißstelle geschaffen wird. Die Materialschwächung kann selbstverständlich auch durch Ritzen, Schneiden oder mittels eines Lasers hergestellt werden, wodurch nicht nur ein qualitativ hochwertiges, sondern zudem auch ein kostengünstiges Herstellen einer derartigen Materialschwächung möglich ist.

Bei einer weiteren vorteilhaften Ausführungsform der erfindungsgemäßen Lösung weisen die Ringe einen geringeren Außendurchmesser auf, als das Lager, wodurch gewährleistet werden kann, dass die Ringe ausschließlich der Axialsicherung des Lagers auf dem Steuerwellenschaft dienen, nicht jedoch mit bspw. einer Lagergasse eines Zylinderkopfs oder einer Zylinderkopfhaube in Kontakt treten.

Bei einer weiteren vorteilhaften Ausführungsform der erfindungsgemäßen Lagerbaugruppe ist vorgesehen, dass der Schrumpfschlauch eine größere axiale Länge aufweist als die Lagerbaugruppe und dadurch längsendseitig in aufgeschrumpftem Zustand die beiden Ringe stirnseitig umgreift und dadurch die gesamte Lagerbaugruppe zusammenhält. Hierdurch kann eine nicht nur kompakte, sondern auch äußerst stabile Lagerbaugruppe geschaffen werden, ohne deren einzelne Bauteile, wie bspw. die beiden Ringe und das Lager, extra aneinander fixieren zu müssen.
Bei einer weiteren vorteilhaften Ausführungsform der erfindungsgemäßen Lösung, weisen die Ringe stirnseitige Ölförderstrukturen auf, insbesondere Rillen, Nuten, Stege oder halbkugelförmige Erhebungen. Nach der Montage der Lagerbaugruppe auf dem Steuerwellenschaft, wird der Steuerwellenschaft noch leicht in Axialrichtung hin und/oder her verschoben, wodurch zwischen dem Lager und den beiden stirnseitig angeordneten Ringen ein zumindest geringfügiger Axialspalt entsteht, der den Freigang ermöglicht. Zumindest auf der dem Lager zugewandten Stirnseite weisen dabei die Ringe die zuvor beschriebenen Ölförderstrukturen auf, die während des Betriebs der Brennkraftmaschine eine stetige Ölzuführung, bspw. generell eine stetige Schmierstoffzuführung in das Lager ermöglichen und dadurch eine zuverlässige Schmierung der Wälzlager gewährleisten und darüber eine langfristig leichtgängige Lagerung der Nockenwelle ermöglichen.
Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Schnittdarstellung durch eine erfindungsgemäße Lagerbaugruppe während der Montage auf einem Montagedorn,
- Fig. 2: eine Schnittdarstellung durch eine erfindungsgemäß hergestellte Nockenwelle vor dem Schleifen der Nocken mit noch aufgebrachtem Schrumpfschlauch auf den Lagerbaugruppen,
- Fig. 3: eine Detaildarstellung aus Fig. 2,
- Fig. 4: eine Schnittdarstellung durch einen Zylinderkopf bzw. eine Zylinderkopfhaube mit eingebauter Nockenwelle bei gleichzeitig von den Lagerbaugruppen entfernten Schrumpfschläuchen,
- Fig. 5: eine Schnittdarstellung durch die Steuerwelle beim axialen Verschieben des Steuerwellenschafts zum Schaffen eines Freigangs.

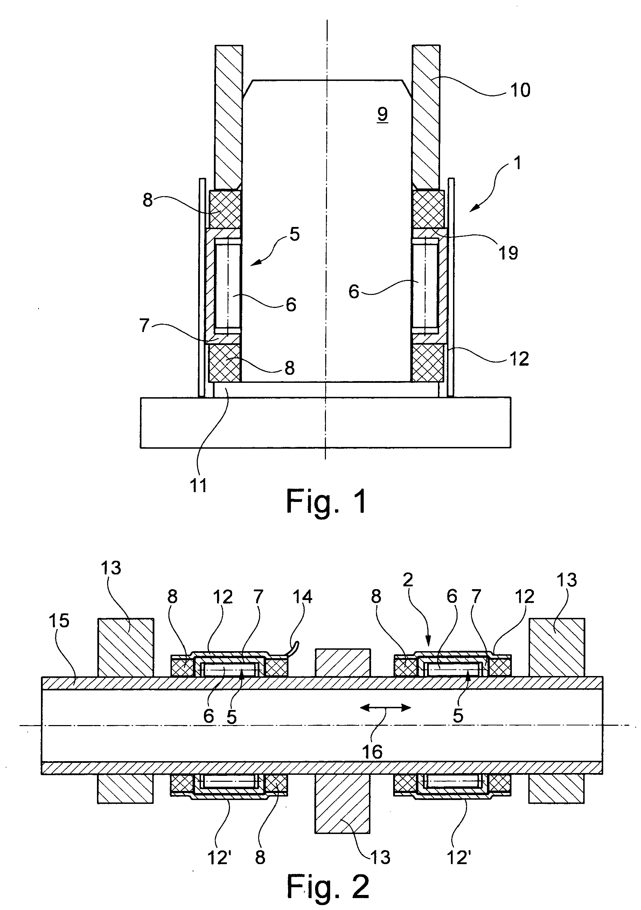

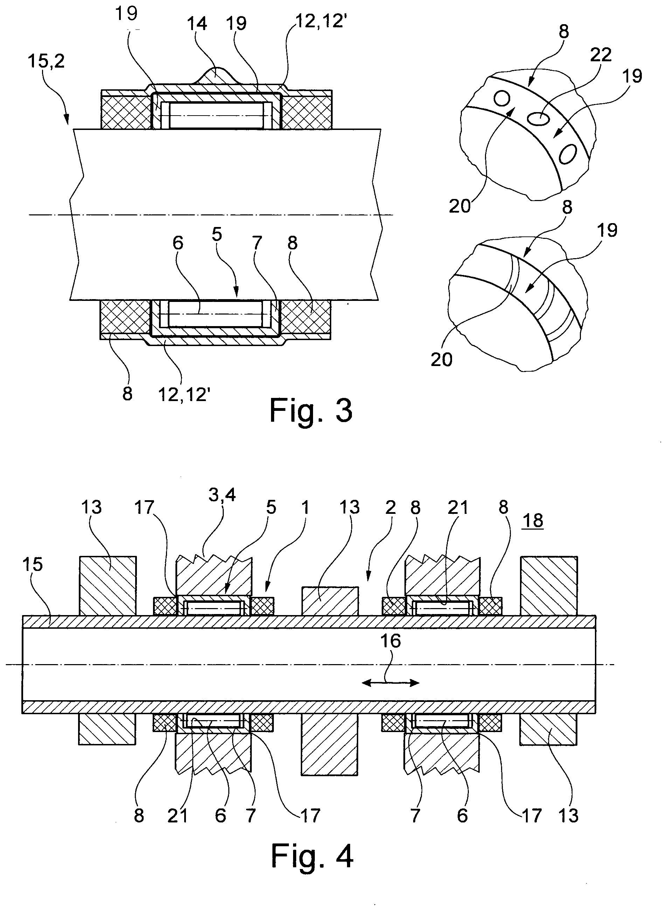

Entsprechend der Fig. 1 wird bei einem erfindungsgemäßen Verfahren zur Herstellung einer Lagerbaugruppe 1, über welche später bspw. eine Steuerwelle/Nockenwelle 2 in einem Zylinderkopf 3 bzw. eine Zylinderkopfhaube 4 (vgl. Fig. 4) gelagert wird, zunächst ein Lager 5 bereitgestellt oder hergestellt, indem Wälzkörper 6 in einem Lagerring 7 montiert bzw. angeordnet werden. Der Begriff "Steuerwelle" kann im Folgen oft auch mit dem Begriff "Nockenwelle" gleichgesetzt werden. Die Wälzkörper 6 können dabei bspw. als Rollen oder als Nadeln, aber auch als Kugeln, ausgebildet sein. Anschließend wird dieses Lager 5 mit zwei stirnseitig dazu angeordneten Ringen 8, insbesondere mit Kunststoff- oder Metallringen, auf einen Montagedorn 9 (vgl. Fig. 1) aufgeschoben, wobei über eine entsprechende Hülse 10 die beiden Ringe 8 gegen die Stirnseiten des Lagers 5 vorgespannt werden. Bewirkt wird dies dadurch, dass auf den oberen Ring 8 die Hülse 10 drückt und der untere Ring 8 auf einer Konsole bzw. einem Anschlag 11 des Montagedorns 9 aufliegt. Anschließend wird ein Schrumpfschlauch 12 über das Lager 5 und die beiden Ringe 8 geschoben und durch Erwärmen auf diese aufgeschrumpft. Alternativ hierzu kann auch ein Folienband 12' über das Lager 5 und die beiden Ringe 8 gewickelt werden. Das Folienband 12' wird dabei unter Spannung und teilweise überlappend über das Lager 5 und die beiden Ringe 8 gewickelt, um die Dichtheit zu gewährleisten. Fig. 1 zeigt dabei den Zustand des Schrumpfschlauchs 12 vor dem Erwärmen, während die Fig. 2 und 3 den Zustand nach dem Aufschrumpfen des Schrumpfschlauches 12 auf die Ringe 8 und das Lager 5 bzw. das unter Spannung über das Lager 5 und die beiden Ringe 8 gewickelte Folienband 12' zeigen. Dieses wird dabei teilweise überlappend aufgewickelt, so dass Lücken vermieden werden können und eine dichte Verpackung für das Lager 5 und die Ring 8 gewährleistet werden kann. Die nun so vorgefertigte Lagerbaugruppe 1 kann nun vom Montagedorn 9 abgezogen werden. Wie der Fig. 1 dabei zu entnehmen ist, bewirkt die Konsole 11 bzw. der Anschlag 11, dass der Schrumpfschlauch 12 stirnseitig weiter nach unten geschoben werden kann, so dass bspw. auch stirnseitiges Umgreifen der Ringe 8 durch den Schrumpfschlauch 12 möglich ist. Die Ringe 8 können dabei radial außenseitig zumindest im Überdeckungsbereich des Schrumpfschlauches 12 eine Strukturierung aufweisen. Gemäß den Fig. 2 und 3 umgreift dabei der Schrumpfschlauch 12 die Stirnseiten der beiden Ringe 8 jedoch nicht, sondern hält diese lediglich an ihrer Außenmantelfläche fest.

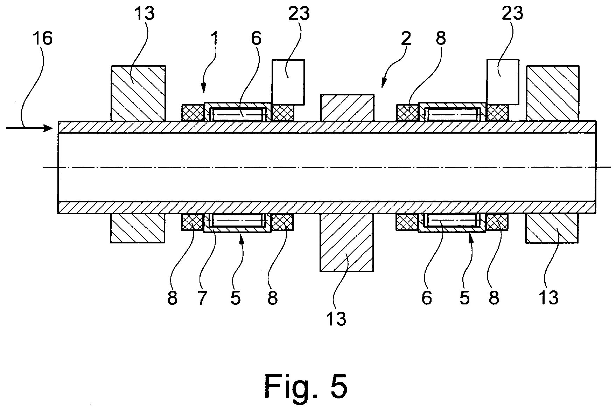

Die erfindungsgemäße Lagerbaugruppe 1 besteht somit aus dem eigentlichen Lager 5, dem Lagerring 7 und den darin gelagerten Wälzkörpern 6, den beiden stirnseitig dazu angeordneten Ringen 8 und dem darauf aufgeschrumpften Schrumpfschlauch 12, der die beiden Ringe 8 am Lager 5 fixiert.
Der aufgeschrumpfte Schrumpfschlauch 12 bzw. das aufgewickelte Folienband 12' schützt das Lager 5 beim Schleifen von Nocken 13 vor eindringenden Schleifpartikeln und damit vor damit evtl. einhergehenden Beschädigungen. An dem Schrumpfschlauch 12 kann bspw. eine Reißlasche 14 angeordnet sein, die ein Aufreißen und damit ein Entfernen des Schrumpfschlauches 12 von der Lagerbaugruppe 1 nach dem Schleifen erleichtert. Ein Folienband 12' kann einfach abgewickelt werden. Der Schrumpfschlauch 12 kann darüber hinaus eine Materialschwächung, bspw. in der Art einer Perforation, aufweisen, durch welche das Entfernen des Schrumpfschlauches 12 nach dem Schleifen der Nocken 13 zusätzlich vereinfacht wird. Der Schrumpfschlauch 12 oder das Folienband 12' kann auch zumindest teilweise von innen eine die Dichtwirkung erhöhende Schicht, insbesondere eine Klebstoffschicht aufweisen.
Die generell erfindungsgemäß separat angefertigte Lagerbaugruppe 1 wird nun bei der Montage der Steuerwelle/Nockenwelle 2 mit zumindest einem Steuerelement, insbesondere einem Nocken 13, auf einen Steuerwellenschaft 15 aufgefädelt, wobei selbstverständlich klar ist, dass nicht nur eine Lagerbaugruppe 1 und ein Steuerelement/Nocken 13 auf dem Steuerwellenschaft 15 aufgefädelt werden, sondern jeweils mehrere davon. Sind die Lagerbaugruppen 1 auf den Steuerwellenschaft 15 aufgeschoben und die Steuerelemente, insbesondere die Nocken 13, mit dem Steuerwellenschaft 15 gefügt, bspw. durch einen thermischen Schrumpfsitz, kann ein Nachbearbeiten bzw. Fertigbearbeiten der Steuerelemente / Nocken 13, insbesondere durch ein Schleifen, erfolgen. Die Lagerbaugruppen 1 werden auf dem Steuerwellenschaft 15 gehalten. Ist die Fertigbearbeitung, bspw. durch Schleifen der Nocken 13 beendet, so können die Nockenwelle 2 gesäubert und der Schrumpfschlauch 12 bzw. das Folienband 12' von den einzelnen Lagerbaugruppen 1, bspw. durch Reißen an der Reißlasche 14, geöffnet und abgezogen werden, und danach die vorgefertigte Nockenwelle 2 in den Zylinderkopf 3 bzw. die Zylinderkopfhaube 4 eingefädelt werden.
Vor Erreichen der Endlage der Nockenwelle 2 im Zylinderkopf 3 bzw. in der Zylinderkopfhaube 4 wird der Steuerwellenschaft 15 relativ zum Lager 5 noch geringfügig in Axialrichtung 16 hin und/oder her bewegt und dadurch ein minimaler Abstand 17 in Axialrichtung 16 zwischen den beiden Ringen 8 und dem Lager 5 geschaffen, wodurch ein Freigang des Lagers 5 ermöglicht wird. Üblicherweise können dabei die Lager 5 der Steuerwelle 2 nach dem Entfernen des Schrumpfschlauches 12 bzw. des Folienbandes 12' zum Schaffen des Freigangs auch vor dem Einbau in den Zylinderkopf 3 axial fixiert werden und die Steuerwelle 2 wird in Axialrichtung vorzugsweise um mindestens 1/10 mm verschoben, wie dies in Fig. 5 gezeigt ist. Hierzu wird auf die Steuerwelle 2 eine Axialkraft ausgeübt und gleichzeitig werden die Lager 5 über Haltekonturen 23 gehalten.
Um eine ausreichende Schmierung des Lagers 5 während dem Betrieb der in eine Brennkraftmaschine eingebauten Steuerwelle 2 zuverlässig gewährleisten zu können, können an die dem Lagerring 7 zugewandten Stirnseiten 19 der beiden Ringe 8 ölfördernde Strukturen bzw. Ölförderstrukturen 20 (vgl. Detaildarstellung aus Fig. 3) insbesondere Rillen, Nuten, Stege oder halbkugelförmige Erhebungen 22, vorgesehen werden, die einen zuverlässigen Transport von Öl in den Bereich zwischen den Wälzkörpern 6 und dem Steuerwellenschaft 15 ermöglichen und dadurch einerseits eine zuverlässige Schmierung des Lagers 5 und andererseits eine leichtgängige Lagerung der Steuerwelle 2 ermöglichen.

Betrachtet man nochmals die Fig. 1 bis 4, so kann man erkennen, dass die Ringe 8 einen geringeren Außendurchmesser aufweisen als der Lagerring 7, wodurch ein vereinfachtes Einschieben der Steuerwelle 2 in die zugehörige Lageröffnung 21 des Zylinderkopfs 3 bzw. Zylinderkopfhaube 4 ermöglicht wird.
Mit dem erfindungsgemäßen Verfahren zur Herstellung der erfindungsgemäßen Lagerbaugruppe 1 und dem sich daraus ergebenden erfindungsgemäßen Verfahren zur Herstellung der Steuerwelle 2, lässt sich letztere deutlich einfacher und kostengünstiger herstellen, da insbesondere ein aufwendiges Abdecken der Lager 5 während dem Schleifen der Steuerelemente, insbesondere der Nocken 13, entfällt. Vielmehr sind die Lager 5 vor einem unerwünschten Zutritt von Schleifstaub mittels der beiden stirnseitig dazu angeordneten Ringe 8 und dem darüber aufgeschrumpften Schrumpfschlauch 12 bzw. dem darüber gewickelten Folienband 12' geschützt. Dieser/Dieses lässt sich im Vergleich zu bisher aus dem Stand der Technik bekannten Schutzkäfigen deutlich einfacher entfernen, bspw. durch ein einfaches Auf- bzw. Abreißen oder Abwickeln.

## Patentansprüche

1. Verfahren zur Herstellung einer Lagerbaugruppe (1) zur Lagerung einer Steuerwelle (2), insbesondere einer Nockenwelle, bei dem
- ein Lager (5) bereitgestellt wird
- das Lager (5) zusammen mit zwei stirnseitig daran angeordneten Ringen (8) auf einen Montagedorn (9) aufgeschoben wird,
- die beiden Ringe (8) gegen die Stirnseiten des Lagers (5) vorgespannt werden,
- ein Schrumpfschlauch (12) über das Lager (5) und die beiden Ringe (8) geschoben und durch Erwärmen aufgeschrumpft wird, oder
- ein Folienband (12') über das Lager (5) und die beiden Ringe (8) gewickelt wird,
- die vorgefertigte Lagerbaugruppe (1) vom Montagedorn (9) abgezogen wird.

2. Verfahren nach Anspruch 1,
**dadurch gekennzeichnet,**
**dass** das Folienband (12') unter Spannung und teilweise überlappend über das Lager (5) und die beiden Ringe (8) gewickelt wird.

3. Lagerbaugruppe (1) hergestellt mit dem Verfahren nach Anspruch 1 mit einem Lager (5), zwei dazu stirnseitig angeordneten Ringen (8) und einem darüber aufgeschrumpften Schrumpfschlauch (12).

4. Lagerbaugruppe nach Anspruch 3,
**dadurch gekennzeichnet,**
**dass** der Schrumpfschlauch (12) zumindest eine Reißlasche (14) aufweist.

5. Lagerbaugruppe nach Anspruch 3 oder 4,
**dadurch gekennzeichnet,**
**dass** der Schrumpfschlauch (12) eine Materialschwächung aufweist.

6. Lagerbaugruppe nach Anspruch 5,
**dadurch gekennzeichnet,**
**dass** die Materialschwächung als Perforation ausgebildet ist.

7. Lagerbaugruppe hergestellt mit dem Verfahren nach Anspruch 1 mit einem Lager (5), zwei dazu stirnseitig angeordneten Ringen (8) und einem darüber gewickelten Folienband (12').

8. Lagerbaugruppe nach einem der Ansprüche 3 bis 7,
**dadurch gekennzeichnet,**
**dass** mindestens einer der Ringe (8) aus Kunststoff oder Metall besteht.

9. Lagerbaugruppe nach einem der Ansprüche 3 bis 8,
**dadurch gekennzeichnet,**
**dass** die Ringe (8) stirnseitige Ölförderstrukturen (20) aufweisen, insbesondere vertiefte oder erhabene Rillen, Nuten, Stege oder halbkugelförmige Erhebungen (22).

10. Lagerbaugruppe nach einem der Ansprüche 3 bis 9,
**dadurch gekennzeichnet,**
**dass** die Ringe (8) einen geringeren Außendurchmesser aufweisen als das Lager (5).

11. Lagerbaugruppe nach einem der Ansprüche 3 bis 10,
**dadurch gekennzeichnet,**
- **dass** die Ringe (8) radial außenseitig zumindest im Überdeckungsbereich des Schrumpfschlauches (12) oder des gewickelten Folienbandes (12') eine Strukturierung aufweisen, und/oder
- **dass** der Schrumpfschlauch (12) oder das gewickelte Folienband (12') zumindest teilweise von innen eine die Dichtwirkung erhöhende Schicht, insbesondere eine Klebstoffschicht aufweist.

12. Lagerbaugruppe nach einem der Ansprüche 3 bis 11, **dadurch gekennzeichnet,**
**dass** das Lager (5) ein Gleitlager oder Wälzlager ist.

13. Verfahren zur Herstellung einer Steuerwelle (2), insbesondere einer Nockenwelle, bei dem
- auf einem Steuerwellenschaft (15) zumindest eine vorgefertigte Lagerbaugruppe (1) nach einem der Ansprüche 3 bis 12 hergestellt entsprechend dem Verfahren nach Anspruch 1 und zumindest ein Steuerelement, insbesondere ein Nocken (13), angeordnet werden,
- der Schrumpfschlauch (12) oder das gewickelte Folienband (12') von der zumindest einen Lagerbaugruppe (1) entfernt wird.

14. Verfahren nach Anspruch 13,
**dadurch gekennzeichnet,**
**dass** nach dem Anordnen der zumindest einen vorgefertigten Lagerbaugruppe (1) nach einem der Ansprüche 3 bis 12 und des zumindest einen Steuerelements, insbesondere des Nockens (13),
- die Steuerelemente geschliffen werden,
- die Steuerwelle (2) gereinigt wird.

15. Verfahren nach Anspruch 13 oder 14,
**dadurch gekennzeichnet,**
**dass** der Schrumpfschlauch (12) oder das Folienband (12') durch Ritzen, Schneiden oder mittels eines Lasers aufgetrennt und entfernt wird.

16. Verfahren nach einem der Ansprüche 13 bis 15,
**dadurch gekennzeichnet,**
**dass** die Lager (5) der Steuerwelle (2) nach dem Entfernen des Schrumpfschlauches (12) oder des gewickelten Folienbandes (12') axial fixiert werden und die Steuerwelle (2) in Axialrichtung vorzugsweise um mindestens 1/10 mm verschoben wird.

## Claims

1. Method for manufacturing a bearing assembly (1) for bearing a control shaft (2), in particular a camshaft, in the case of which
- a bearing (5) is provided
- the bearing (5) together with two rings (8) disposed thereon on the face sides are slid onto an assembly pin (9),
- the two rings (8) are pre-tensioned against the face sides of the bearing (5),
- a heat-shrinkable tube (12) is slid over the bearing (5) and the two rings (8) and is shrunk by heating, or
- a film strip (12') is wound around the bearing (5) and the two rings (8),
- the prefabricated bearing assembly (1) is drawn off the assembly pin (9).

2. Method according to claim 1,
**characterised in**
**that** the film strip (12') is wrapped under tension and partially overlappingly around the bearing (5) and the two rings (8).

3. Bearing assembly (1) manufactured with the method according to claim 1 with a bearing (5), two rings (8) disposed on the face sides thereof and a heat-shrinkable tube (12) shrunk thereupon.

4. Bearing assembly according to claim 3,
**characterised in**
**that** the heat-shrinkable tube (12) has at least one pull tab (14).

5. Bearing assembly according to claim 3 or 4,
**characterised in**
**that** the heat-shrinkable tube (12) has a material weakened area.

6. Bearing assembly according to claim 5,
**characterised in**
**that** the material weakened area is formed as perforation.

7. Bearing assembly manufactured with the method according to claim 1 with a bearing (5), two rings (8) disposed on the face sides thereof and a film strip (12') wrapped around it.

8. Bearing assembly according to any of claims 3 to 7,
**characterised in**
**that** at least one of the rings (8) is made of plastic or metal.

9. Bearing assembly according to any of claims 3 to 8,
**characterised in**
**that** the rings (8) have on their face sides oil conveying structures (20), in particular recessed or raised channels, grooves, ridges or hemispherical shaped protuberances (22).

10. Bearing assembly according to any of claims 3 to 9,
**characterised in**
**that** the rings (8) have a smaller outer diameter than the bearing (5).

11. Bearing assembly according to any of claims 3 to 10,
**characterised in**
- **that** the rings (8) have a patterning radially on the outside at least in the coverage area of the heat-shrinkable tube (12) or the wrapped film strip (12'), and/or
- **that** the heat-shrinkable tube (12) or the wrapped film strip (12') has at least partially from inside a layer, in particular an adhesive layer, increasing the sealing effect.

12. Bearing assembly according to any of claims 3 to 11,
**characterised in**
**that** the bearing (5) is a sliding bearing or a rolling element bearing.

13. Method for manufacturing a control shaft (2), in particular a camshaft, in the case of which
- on a control shaft shaft (15) at least one prefabricated bearing assembly (1) according to any of claims 3 to 12 manufactured according to the method according to claim 1 and at least one control element, in particular a cam (13), are disposed,
- the heat-shrinking tube (12) or the wrapped film strip (12') is removed from the at least one bearing assembly (1).

14. Method according to claim 13,
**characterised in**
**that** according to the disposing of the at least one prefabricated bearing assembly (1) according to any of claims 3 to 12, and of the at least one control element, in particular the cam (13),
- the control elements are ground,
- the control shaft (2) is cleaned.

15. Method according to claim 13 or 14,
**characterised in**
**that** the heat-shrinking tube (12) or the film strip (12') is separated by scoring, cutting or using a laser and is removed.

16. Method according to any of claims 13 to 15,
**characterised in**
**that** the bearings (5) of the control shaft (2) after the removal of the heat-shrinking tube (12) or the wrapped film strip (12') are axially fixed and the control shaft (2) is slid in axial direction preferably by at least 1/10 mm.

## Revendications

1. Procédé de fabrication d'un module de palier (1) pour le logement d'un arbre de commande (2), en particulier d'un arbre à cames, dans lequel
- un palier (5) est mis à disposition
- le palier (5) est enfilé conjointement avec deux bagues (8) qui y sont agencées côté frontal sur un mandrin de montage (9),
- les deux bagues (8) sont précontraintes contre les côtés frontaux du palier (5),
- une gaine rétractable (12) est poussée au-dessus du palier (5) et des deux bagues (8) et frettée par chauffage, ou
- une bande de feuille (12') est enroulée au-dessus du palier (5) et des deux bagues (8),
- le module de palier (1) préfabriqué est retiré du mandrin de montage (9).

2. Procédé selon la revendication 1,
**caractérisé en ce**
**que** la bande de feuille (12') est enroulée sous tension et en partie par chevauchement au-dessus du palier (5) et des deux bagues (8).

3. Module de palier (1) fabriqué avec le procédé selon la revendication 1 avec un palier (5), deux bagues (8) qui y sont agencées côté frontal et une gaine rétractable (12) frettée au-dessus.

4. Module de palier selon la revendication 3,
**caractérisé en ce**
**que** la gaine rétractable (12) présente au moins une patte de déchirement (14).

5. Module de palier selon la revendication 3 ou 4,
**caractérisé en ce**
**que** la gaine rétractable (12) présente un affaiblissement de matériau.

6. Module de palier selon la revendication 5,
**caractérisé en ce**
**que** l'affaiblissement de matériau est réalisé en tant que perforation.

7. Module de palier fabriqué avec le procédé selon la revendication 1 avec un palier (5), deux bagues (8) qui y sont agencées côté frontal et une bande de feuille (12') enroulée au-dessus.

8. Module de palier selon l'une quelconque des revendications 3 à 7,
**caractérisé en ce**
**qu'**au moins une des bagues (8) est en plastique ou métal.

9. Module de palier selon l'une quelconque des revendications 3 à 8,
**caractérisé en ce**
**que** les bagues (8) présentent des structures de transport d'huile (20) côté frontal, en particulier des cannelures en creux ou en relief, des rainures, des traverses ou des saillies semi-sphériques (22).

10. Module de palier selon l'une quelconque des revendications 3 à 9,
**caractérisé en ce**
**que** les bagues (8) présentent un diamètre extérieur inférieur à celui du palier (5).

11. Module de palier selon l'une quelconque des revendications 3 à 10,
**caractérisé en ce**
- **que** les bagues (8) présentent radialement côté extérieur au moins dans la zone de recouvrement de la gaine rétractable (12) ou de la bande de feuille (12') enroulée une structuration, et/ou
- **que** la gaine rétractable (12) ou la bande de feuille (12') enroulée présente au moins en partie de l'intérieur une couche augmentant l'effet d'étanchéité, en particulier une couche d'adhésif.

12. Module de palier selon l'une quelconque des revendications 3 à 11,
**caractérisé en ce**
**que** le palier (5) est un palier à glissement ou un palier à roulement.

13. Procédé de fabrication d'un arbre de commande (2), en particulier d'un arbre à cames, dans lequel
- au moins un module de palier (1) préfabriqué selon l'une quelconque des revendications 3 à 12 fabriqué conformément au procédé selon la revendication 1 et au moins un élément de commande, en particulier une came (13), sont agencés sur un arbre de commande (15),
- la gaine rétractable (12) ou la bande de feuille (12') enroulée est retirée de l'au moins un module de palier (1).

14. Procédé selon la revendication 13,
**caractérisé en ce**
**qu'**après l'agencement de l'au moins un module de palier (1) préfabriqué selon l'une quelconque des revendications 3 à 12 et de l'au moins un élément de commande, en particulier de la came (13),
- les éléments de commande sont poncés,
- l'arbre de commande (2) est nettoyé.

15. Procédé selon la revendication 13 ou 14,
**caractérisé en ce**
**que** la gaine rétractable (12) ou la bande de feuille (12') est ouverte et retirée par éraflure, coupe ou au moyen d'un laser.

16. Procédé selon l'une quelconque des revendications 13 à 15,
**caractérisé en ce**
**que** le palier (5) de l'arbre de commande (2) est fixé axialement après le retrait de la gaine rétractable (12) ou de la bande de feuille (12') enroulée, et l'arbre de commande (2) est déplacé dans la direction axiale de préférence d'au moins 1/10 mm.
